Europäisches Patentamt

European Patent Office

Office européen des brevets

(11) Publication number: **0 388 032**
**A2**

# (12) EUROPEAN PATENT APPLICATION

(21) Application number: **90301886.9**

(22) Date of filing: **21.02.90**

(51) Int. Cl.5: **G06F 12/08**

(30) Priority: **13.03.89 JP 57761/89**

(43) Date of publication of application:
**19.09.90 Bulletin 90/38**

(84) Designated Contracting States:
**DE FR GB**

(71) Applicant: **International Business Machines Corporation**
**Old Orchard Road**
**Armonk, N.Y. 10504(US)**

(72) Inventor: **Matsumoto, Takashi, Coop Sunshaine 203goh**
**9banch 13goh, Tamagawa 4-chome, Setagaya-ku**
**Tokyo-to(JP)**

(74) Representative: **Grant, Iain Murray**
**IBM United Kingdom Limited Intellectual Property Department Hursley Park**
**Winchester Hampshire SO21 2JN(GB)**

(54) **Storage control in cached multi-processor systems.**

(57) A multiprocessor system in which a plurality of processors are connected to a shared bus and a shared memory through private caches and in which access to the shared bus is monitored to process data in the private caches in accordance with a specified protocol, the multiprocessor system further comprising a protocol bus carrying protocol signals signifying a current one of a plurality of possible protocols, and cache control mechanisms connected in common to the protocol bus and individually effective for and on each private cache; each control mechanism comprising: protocol memory means storing an indication of the current protocol specified for identifiable data memory areas controlled thereby, protocol signal generating means for reading, from the protocol memory means when data is accessed, the protocol of the memory area to which the accessed data belongs and broadcasting a corresponding protocol signal on the protocol bus, and detecting means for detecting protocol signals on the protocol bus and causing the data in the corresponding private cache to be processed under the protocol specified thereby. A processor group bus for broadcasting processor group signals specifying various groups of processors the members of which are to observe a specified protocol can also be provided.

FIG. 2

## STORAGE CONTROL IN CACHED MULTI-PROCESSOR SYSTEMS

This invention relates to storage control in cached multiprocessor systems wherein a plurality of processors are connected to a shared bus and a shared memory via respective private caches, and in particular to a multiprocessor system having so-called snoop caches, wherein a controller is provided for each private cache to monitor signals on the shared bus, perform some data manipulation operations for one or more private caches and to assume its part of the responsibility for the maintenance of the consistency of data throughout the private caches.

In a multiprocessor system of a type with a shared memory and shared bus, it is a common technique to add a private cache to each processor for reducing the conflict for access to the bus and the memory. Such a technique requires a mechanism for guaranteeing the consistency among data in over the plurality of caches and it follows that any improvement in operating such a mechanism that leads to the bus traffic being handled more efficiently must be advantageous. One such mechanism which has found favour produces what is called a snoop cache.

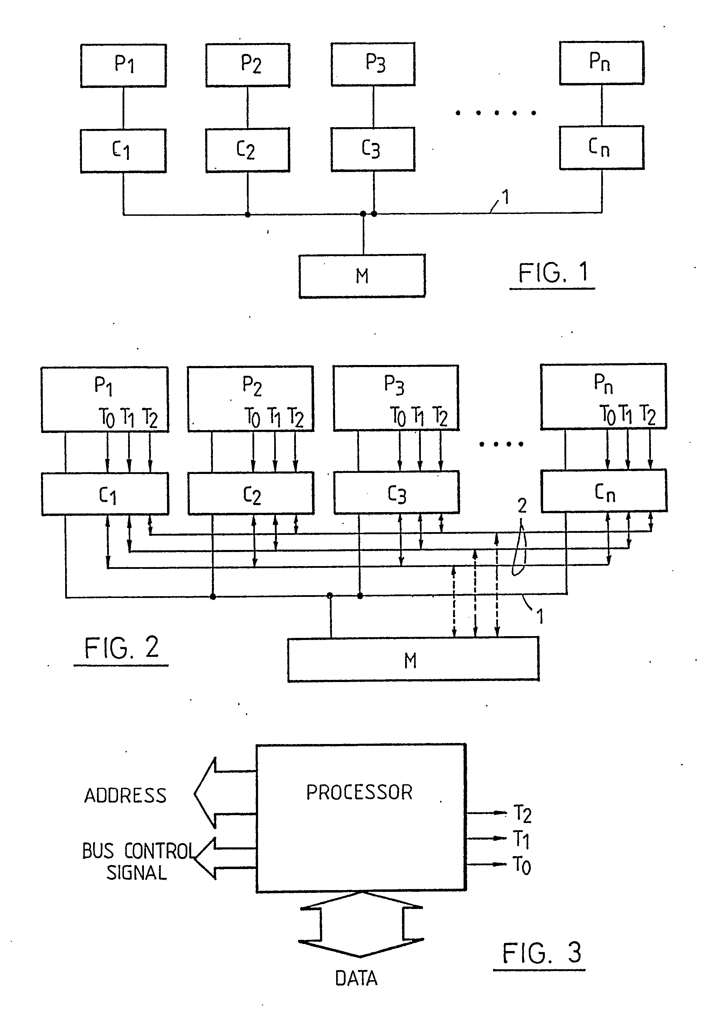

Fig. 1 shows a multiprocessor system using snoop caches. Referring to Fig. 1, a plurality of processors $P_1$, $P_2$ ... Pn are connected to a shared bus 1 and a shared memory M through private caches $C_1$, $C_2$ ... on, respectively. Consistency of data is achieved by a distributed control system, in which a controller is installed at each private cache site to monitor signals on the shared bus 1. This system assures the consistency of data by making each controller operate in accordance with the protocol initialised for the shared bus 1.

Conventional protocols may be classified from the viewpoint of the procedures used for writing shared data, into the two types, "invalidate" and "update". In the invalidate type, when shared data in a private cache has been written over, the shared data is invalidated in all the other private caches holding such shared data. On the other hand, in the update type, a copy of the written data is sent to each of the other private caches, to update the same.

Both of the above types of protocol have advantages as well as disadvantages, and neither is suitable for all types of shared data. The most suitable protocol for use in a given set of circumstances will be discussed below in so far as it is deemed better to use invalidate or update when an individual type of shared data is allocated to a memory.

1) When a variable is used as a semaphore or used for passing data between processors and thus can be expected to be frequently referenced by a plurality of processors, it is preferable for the data to be processed by a update protocol to enhance the possibility of cache hit at the time of reference.

2) When a variable is a local variable used by only one processor (there is a possibility that even a local variable will become shared data, because the physical address of the variable is allocated to other caches as well due to a page control schema) or when a variable or a work area is in a critical section and thus is expected to be used exclusively by a single processor for a long period of time, for as long as it exists in a plurality of caches - as shared data - access will extend to the shared bus outside the caches every time data is written, resulting in lowered efficiency. In this case, the efficiency may be improved by using an invalidate protocol, invalidating counterpart data entries in all caches, other than the active one.

It should be noted that the term "cache protocol" is sometimes used in a sense which is wide enough to include data writing and data replacement. In this context, however, the term is limited to shared data handling and, therefore, unless otherwise specified, the term "protocol", when employed, is assumed to refer to the way of handling shared data.

It will be understood that so far as protocol optimisation relative to data type is concerned, conventional multiprocessor techniques are deemed inadequate as discussed below:

a) In most systems, the protocol is fixed to one type, or the protocol is selected at the time of start-up - initialisation - of the system and maintained fixed to that one type, at least until re-initialisation. This predicates that some types of shared data are accessed inefficiently, and since various types of shared data are normally randomly interleaved, it is considered that efficiency must be improved if it were possible to select the type of protocol dynamically in response to the data type currently active.

b) TOP-1 (prototype name), developed by Tokyo Research Laboratory, IBM Japan Ltd., can select between update and invalidate for each processor but not for each variable or work area as described above as being desirable. TOP-1 is designed to select a protocol type by changing the contents of a register in each cache -involving execution of a command - and, for effective control if the possibility for a fresh protocol to be used to access each variable or work area is to be provided, the command must be inserted and executed each time data is accessed.

The present invention is thought to go a long way towards providing cache control which is simple and

2

which can switch a protocol, if needed, for each variable or work area depending on the type of shared data, without incurring undue overhead.

The present invention provides a multiprocessor system in which a plurality of processors are connected to a shared bus and a shared memory through private caches and in which access to the shared bus is monitored to process data in the private caches in accordance with a specified protocol, the multiprocessor system further comprising:

a protocol bus carrying protocol signals signifying a current one of a plurality of possible protocols, and cache control mechanisms connected in common to the protocol bus and individually effective for and on each private cache;

each control mechanism comprising:

protocol memory means storing an indication of the current protocol specified for identifiable data memory areas controlled thereby,

protocol signal generating means for reading, from the protocol memory means when data is accessed, the protocol of the memory area to which the accessed data belongs and broadcasting a corresponding protocol signal on the protocol bus, and

detecting means for detecting protocol signals on the protocol bus and causing the data in the corresponding private cache to be processed under the protocol specified thereby.

In an extension of such an arrangement, it is possible to provide a cache control mechanism for observing a protocol of a given type only in a predetermined processor group.

In an embodiment of the invention disclosed in greater detail hereinafter, multiprocessor system includes a shared bus and shared memory with snoop caches for each processor, data specifying the protocol used by the caches when accessing an identifiable area, is added to the particular area. Each processor (or memory control unit) outputs this additional data, corresponding to a memory area to be processed, as a signal at the memory access time. When the memory access is executed using the shared bus, the additional data signal is also output on the shared bus. All caches connected to the shared bus thus executing a bus snoop (bus monitoring), switch, if necessary, to the protocol indicated by the signal on the shared bus if they have the data area referred to.

Further, the data carried by the bus can be arranged to specify a processor group as by expanding the shared bus, so that the signal identifying a processor group is outputted during bus access from the processors which are using the bus. With a certain type of protocol, the snooping operation of the cache is controlled, based on these signals and depending on whether or not the processors belong in the same processor group.

The present invention will be described further by way of example with reference to embodiments thereof together with the aforementioned example of the prior art, as illustrated in the accompanying drawings, in which:-

Fig. 1 is a block diagram showing the conventional multiprocessor system already referred to which includes a shared bus and a shared memory and which has snoop caches;

Fig. 2 is a block diagram showing the overall structure of the disclosed embodiment;

Fig. 3 is a diagram showing the material signals associated with each processor of the embodiment of Fig. 2;

Fig. 4 is a diagram showing the page control mechanism of and page entry used;

Fig. 5 is a diagram showing a detail of another embodiment in which the structure of Fig. 4 is replaced by a conventional processor;

Fig. 6 is a chart illustrating page assignment depending on protocol type; and

Fig. 7 is a block diagram showing the overall structure of another embodiment of this invention which enables the specification of protocol typing within processor groups.

Fig. 2 schematically shows an embodiment of the invention in which which shared memory protocol can be set dynamically to one of three types - update, invalidate and all-read - each memory area. Much of the multiprocessor system is as that of Fig. 1 and part thereof corresponding to those in Fig. 1 are indicated by corresponding numerals and no detailed description of them is needed nor given. The "all-read" protocol will be described in detail hereinafter.

Processors $P_1$, $P_2$ ... $P_n$ transmit signals $T_1$, $T_2$ and $T_3$ representing protocol types to a protocol bus 2 through corresponding private caches $C_1$, $C_2$ ... $C_n$ respectively. The signals $T_1$, $T_2$ and $T_3$ indicate that the protocol type for the data currently on the shared bus, i.e., update, invalidate or all-read. Each of the private caches $C_1$, $C_2$ ... $C_n$ has a cache control mechanism (not shown) which identifies the protocol to be used with respect to the data on the shared bus 1 by monitoring the protocol type bus 2 and executes the protocol procedure as required (when data is shared).

In this embodiment, protocol type indicating information is not produced for each address of the data, but only for each memory area. As described in relation to prior art, a cache protocol suitable for each memory (each variable or work area) is different. Accordingly, controlling the protocol for each memory is critical for improving the performance. However, adding information for representing the type of protocol for each address will require a substantial amount of memory area just for that information as well as controlling hardware, resulting in low efficiency. Therefore, control is performed by information representing the type of protocol for each memory area. Here, the unit of memory area is the "page" and attention is paid to the page control mechanism and the information added to each page.

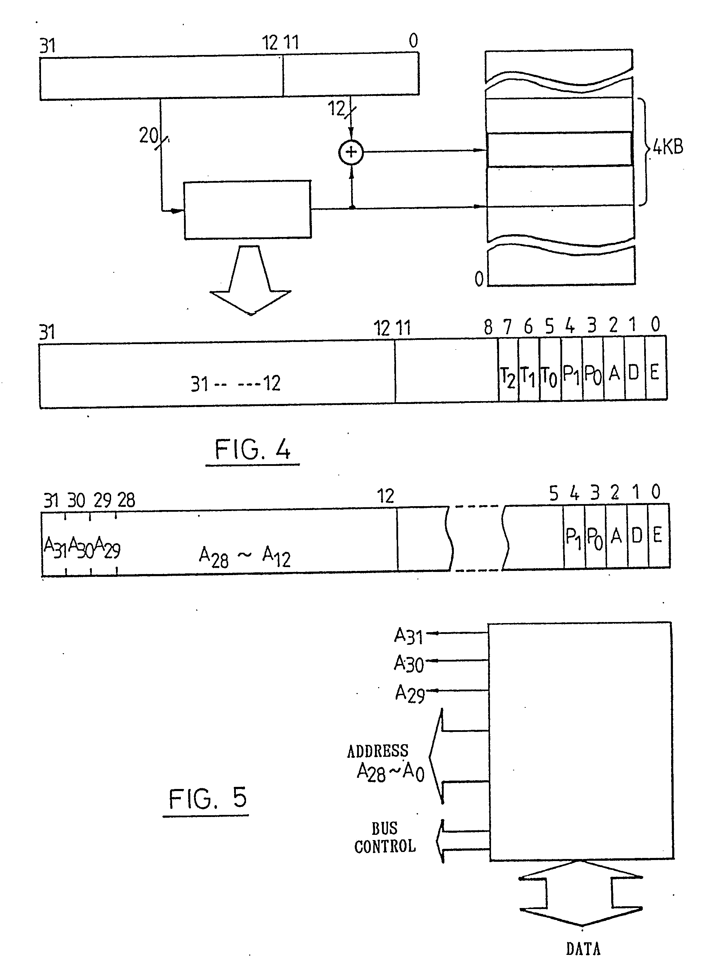

Fig. 3 shows input and output signals associated with the generic processor P of Fig. 2, and Fig. 4 shows an example of the page control mechanism and a page entry of the arrangement of Fig. 2.

As stated, the page control mechanism controls the memory by page (4 kilobytes in Figs. 3 and 4) and has a page entry for each page which includes the page address in real memory and the page protection to be observed. At the time of memory access by each processor, the page entry - or the page entry copy from the translation look-aside buffer, TLB, if present and including a copy of the relevant page entry - as indicated by the high order bits of the logical address, is always referenced to check its access authorisation, and the address of the real memory is calculated based on the page, frame, address of the page entry. If and when the access authorisation has been met the real memory is accessed.

$P_1$ and $P_0$ in Fig. 4 are bits representing the access authorisations corresponding to the protection levels, as shown in the table below.

| $P_1$ | $P_0$ | User mode | Supervisor mode |
|---|---|---|---|
| 0 | 0 | None | Read/write |
| 0 | 1 | None | Read/write |
| 1 | 0 | Read only | Read/write |
| 1 | 1 | Read/write | Read/write |

A, D and E in the page entry are bits used for the control of virtual memory, indicating whether the page has been accessed, has been rewritten or exists in real memory.

$T_2$, $T_1$ and $T_0$ are bits representing the protocol types for the page in question and indicate the type of protocol used to access the page data. In the example given, the type of the protocol is represented by 3 bits corresponding to the number of protocols supported by the disclosed system. However, please note that 3 bits can signify up to $2^3 = 8$ different protocols if coded differently. In order to indicate the pertinent protocol when a processor (or MMU) accesses a page in memory, the processor raises the appropriate one of three signal lines provided for outputting the bit indicating that protocol type (Fig. 3). When the multiprocessor is structured as shown in Fig. 2, if access extends from caches $C_1$, $C$ ... $C_n$ onto the shared bus 1, that is, traffic on the shared bus 1 is required, a signal indicating the type of protocol is output also to the shared bus 1, so that other caches $C_1$, $C$ ... $C_n$, by performing a bus snoop (bus monitoring), can select the same protocol for use, if required, by use of this signal.

Fig. 5 shows an alternative to the protocol control of Fig. 4 which is implemented with a conventional CPU or MMU. In the alternative in Fig. 5, since no bits such as $T_2$, $T_1$ and $T_0$ are included in the page entry, the upper 2 or 3 bits of an address are used to represent the protocol types (Fig. 5). If 32 bits real address lines are available, the use of 2 or 3 bits for this purpose will still leave 512 Mbytes -- 1 Gbytes of real memory space available, thus raising no problem in practical use.

Next, the all-read type protocol will be described.

If a mechanism for efficiently changing protocols can be constructed, protocols, which are effective only for some types of data and have not been used until now because their use with other types of data resulted in lowered efficiency, can be effectively used. For such protocols, control should be used selectively for suitable data. An example of such a protocol is a protocol called "all-read." This protocol is one in which cache which is performing a bus snoop takes data on the shared bus, which another cache is reading the data on the shared bus.

This protocol is suitable in the following cases. When all processors need to make reference to the same data, and each processor individually reads it and allocate it from the memory to its cache, to treat each cache separately means undue bus traffic on the shared bus before the operation is complete. The measure approximates to the product of the amount of data divided by the bus capacity and the number of

4

processors involved. If an all-read protocol is used, the bus traffic reduced to the first stated quantity and high performance can be provided.

In the following, the operations arising out of the snooping by the cache control will be described in terms of update, invalidate and all-read protocols. The operations of the cache resulting from bus-snooping are itemised below:

NOTE: Here, attention is directed only to operations of cache whose efficiency may be enhanced by changing the protocol for various data areas. Thus, in this itemisation, for simplicity of description, the system to perform the write operation is not taken into account. When the write operation system is write back, and the like, the operations of the cache during snooping will become a little more complex due to the data ownership (who has the newest correct data and is responsible for outputting it onto the bus).

Update type
- If a write access causes a cache hit, the cache will update the data in the cache with the data on the bus.
- Otherwise, it will do nothing (refer to note).

Invalidate type
- If a write access causes a cache hit, the cache will invalidate the data in the cache.
- Otherwise, it will do nothing (refer to the note).

All-read type
- If a read access does not cause a cache hit and if it is possible to absorb the data without inducing write back due to data replacement (i.e., without access to the system bus), the data on the bus will be written into the cache.
- If a write access causes a cache hit, it will perform the same processing as in the case of an update write access.
- Otherwise, it will do nothing (refer to the note).

Various other types of cache protocol could be used, including invalidate read, under which the snooping cache invalidates the data in the cache when read access by other processors using the shared bus has caused a cache hit, but for the purposes of this description, examples are limited to the above three types.

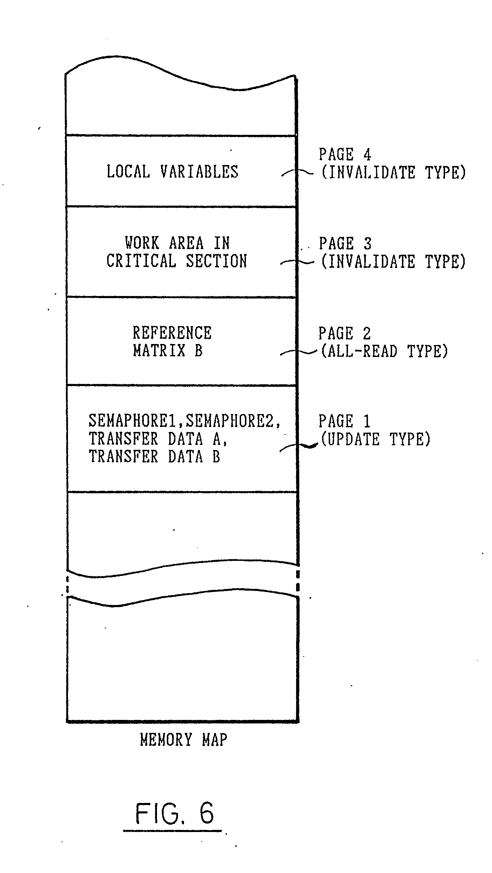

Examples of page assignment for each variable and work area are shown in Fig. 6. In accordance with the analysis of access pattern by a compiler or the instruction of protocol type by a programmer, the variables or work areas are assigned in pages having suitable protocol typing. Concerning the command codes of the processor, assignment to all-read type page is advantageous from efficiency viewpoint when all processors shared the same codes.

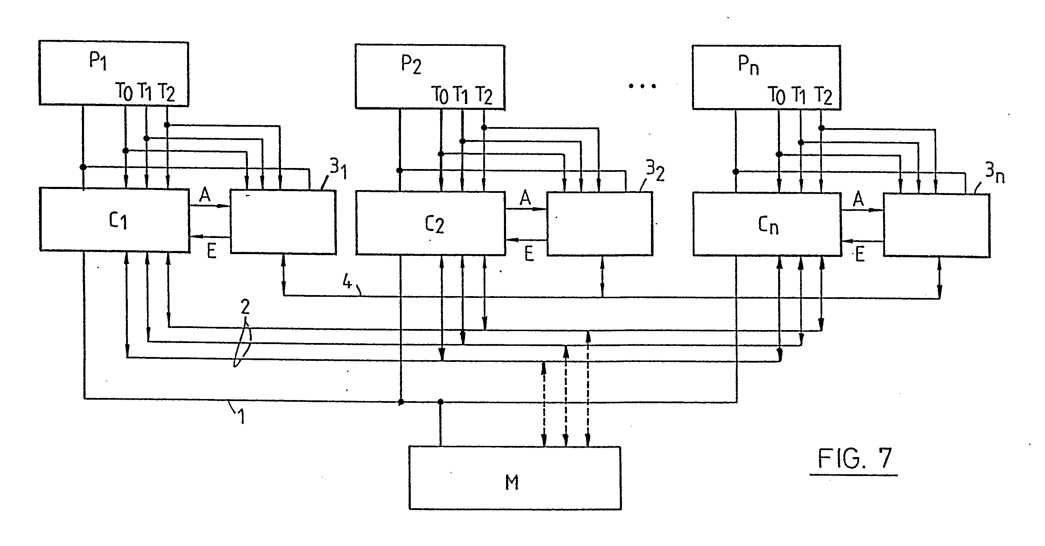

Next, an embodiment in which an all-read protocol is effectively used will be described with reference to Fig. 7. In Fig. 7, detailed description is omitted for parts corresponding to those or Figs. 1 and 2 which are represented by the same numerals.

In the embodiment of Fig. 7, following factors are considered:

In a bus access for which an all-read protocol has been specified, it is desirable to specify a cache group (processor group) to which reception of the data is limited, so that the data is not taken by unrelated caches. Particularly, when a program is run as an application program on OS, a plurality of mutually unrelated tasks are expected to run simultaneously on the multiprocessor system, and in this context such a limitation is desired. To achieve this function, the only additions required are a bus or extra bus capacity for transmitting information for specifying the cache/processor group from those snooping the system bus and hardware in each controller/processor for storing the information and outputting it when all-read type access are required. Each cache, in its snooping operation, monitors also the processor group specifying bus to see if it is incorporated in the specified processor group when the access to the system bus is performed under the all-read protocol, and absorbs the data, space permitting, only when selected.

If very delicate control is required also for specifying the processor group, some way for storing the specifying information in individual page entries is required so that the specification may be changed page by page. However, this results in a substantial increase in the number of connections that have to be made and thus of the chip pins used up). However, since the basic idea of all-read is to allocate the data to all the caches in a processor group which are processing a certain task simultaneously, it is deemed sufficient to store one item of information in each cache to specify the processor group for that task. Therefore, one register is made available in each cache (Fig. 7)/controller/processor for this purpose.

As disclosed, processor group specifying circuits $3_1$, $3_2$ ... $3_n$ and a processor group specifying bus 4 are the cache control mechanism used to achieve this end. The width of the processor specifying bus is $\log_2(n+2)-1$ lines (n represents the number of processors). Its operations are as follows:
- The processor group specifying circuits $3_1$, $3_2$ ... $3_n$, when any of the processors $P_1$, $P_2$ ... $P_n$ performs all-read type access using the shared bus 1, output onto the processor group specifying bus 4 the processor group identification number held in their internal registers.

- The processor group indication circuits $3_1$, $3_2$ ... $3_n$, when the processors $P_1$, $P_2$ ... $P_n$ are not using the shared bus 1, snoop the processor group specifying bus 4, compare the result with values in the registers, and output to the caches $C_1$, $C$ ... $C_n$ a signal indicating whether or not any of the processors $P_1$, $P_2$ ... $P_n$ are selected. The caches $C_1$, $C$ ... $C_n$, when the access to the shared bus is all-read, change over the snooping operation according to the signal.

The setting of the identification numbers for specifying the processor groups in the registers in the processor group specifying circuits $3_1$, $3_2$ ... $3_n$ is performed by the processors using software. When OS is present, it suffices to set the registers every time the OS assigns processors to a task. The signal lines A and E between the caches $C_1$, $C$ ... $C_n$ and the processor group specifying circuits $3_1$, $3_2$ ... $3_n$ in Fig. 7, respectively, are signal lines showing that the processors $P_1$, $P_2$ ... $P_n$ are performing the all-read type access and signal lines showing that the processors $P_1$, $P_2$ ... $P_n$ have been selected.

Of course, since this processor group specifying bus 4 is used only for specifying the processor group (cache group) subjected to the operation, it is usable under protocols other than all-read.

If some data (variables) is referenced by all processors $P_1$, $P_2$ ... $P_n$ in some part of a program, and it is exclusively used by a single processor in some other part of the program, that is, if data for which the desirable protocol type greatly varies are present in a program, this situation may be handled by gathering data which undergo a similar change on one page and rewriting the protocol type in this page entry.

Such arrangements enable change-over between various cache access protocols depending on the shared data type, without undue overhead. This makes it possible to approach selecting an optimal protocol for each item of shared data, thereby reducing the frequency of using the shared bus and, moreover, improving the performance of the multiprocessor system.

## Claims

1. A multiprocessor system in which a plurality of processors are connected to a shared bus and a shared memory through private caches and in which access to the shared bus is monitored to process data in the private caches in accordance with a specified protocol, the multiprocessor system further comprising:
a protocol bus carrying protocol signals signifying a current one of a plurality of possible protocols, and
cache control mechanisms connected in common to the protocol bus and individually effective for and on each private cache;
each control mechanism comprising:
protocol memory means storing an indication of the current protocol specified for identifiable data memory areas controlled thereby,
protocol signal generating means for reading, from the protocol memory means when data is accessed, the protocol of the memory area to which the accessed data belongs and broadcasting a corresponding protocol signal on the protocol bus, and
detecting means for detecting protocol signals on the protocol bus and causing the data in the corresponding private cache to be processed under the protocol specified thereby.

2. A multiprocessor system as claimed in Claim 1, in which the unit of the data memory area is a page.

3. A multiprocessor system as claimed in Claim 2, in which the protocol memory means and protocol signal generating means are embodied in the corresponding cache page control mechanism.

4. A multiprocessor system as claimed in any preceding claim, further including a processor group bus for broadcasting processor group signals specifying various groups of processors the members of which are to observe a specified protocol, the cache control mechanisms being connected in common to the processor group bus and including;
a processor group signal generating means for transmitting the processor group signal to the processor group bus when the protocol type signal represents the protocol type which limits effective processors, and
grouping means for detecting processor group signals on the processor group bus to determine whether or not the associated processor grouping to which the currently specified protocol is to apply contains the associated cache/processor, applying control accordingly.

6

FIG. 1

FIG. 2

FIG. 3

FIG. 4

FIG. 5

LOCAL VARIABLES — PAGE 4 (INVALIDATE TYPE)

WORK AREA IN CRITICAL SECTION — PAGE 3 (INVALIDATE TYPE)

REFERENCE MATRIX B — PAGE 2 (ALL-READ TYPE)

SEMAPHORE1, SEMAPHORE2, TRANSFER DATA A, TRANSFER DATA B — PAGE 1 (UPDATE TYPE)

MEMORY MAP

FIG. 6

FIG. 7